# EUROPEAN PATENT APPLICATION

(11) **EP 4 836 493 A1**
(43) Date of publication of application: **04.11.2026**
(21) Application number: 24916673.7
(22) Date of filing: 16.12.2024
(51) Int. Cl.: H04W 24/02

(54) **SENSING PROCESSING METHOD AND SYSTEM, COMMUNICATION APPARATUS AND STORAGE MEDIUM**

(30) Priority: 08.01.2024 CN 202410029964
(71) Applicant: ZTE Corporation, Shenzhen, Guangdong 518057 (CN)
(72) Inventor: SU, Dongliang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/139570
(87) International publication number: WO 2025/148626

(57) **Abstract**

Provided are a sensing processing method and system, a communication apparatus and a storage medium. The sensing processing method comprises: receiving a plurality of sensing results from a plurality of first nodes, each sensing result among the plurality of sensing results representing a sensing result in a sub-region managed by a corresponding first node; and on the basis of sensing results in a plurality of sub-regions, determining a sensing result of a sensing region, the sensing region comprising the plurality of sub-regions.

## Description

The present disclosure claims priority to Chinese Patent Application No. 202410029964.2 filed on January 8, 2024, the entire contents of which are incorporated herein by reference.

### TECHNICAL FIELD

The present disclosure relates to the technical field of communications, and in particular, to a sensing processing method and system, a communication apparatus, and a storage medium.

### BACKGROUND

An integrated sensing, communication and computing network architecture introduces computing devices on the basis of integrated sensing and communication to provide computing support for data processing in communication and sensing scenarios. The integrated sensing, communication and computing network architecture typically includes a radio access network, user equipment (e.g., an unmanned aerial vehicle), computing devices, and a core network having a sensing server.

### SUMMARY

In one aspect, an embodiment of the present disclosure provides a sensing processing method. The sensing processing method includes:

receiving a plurality of sensing results from a plurality of first nodes, where each sensing result of the plurality of sensing results represents a sensing result within a sub-area managed by a corresponding first node; and determining a sensing result of a sensing area based on sensing result of each sub-area of a plurality of sub-areas, where the sensing area includes the plurality of sub-areas.

In another aspect, an embodiment of the present disclosure provides another sensing processing method. The sensing processing method includes:

acquiring sensing detection data of sensing nodes within a managed sub-area; in a case where the sensing detection data represents that a sensing target is located in the sub-area managed by the first node, determining a sensing result of the sub-area based on the sensing detection data; and sending the sensing result to a sensing network element.

In yet another aspect, an embodiment of the present disclosure provides a sensing communication system. The sensing communication system includes: a first node and a sensing network element;

the first node, configured to determine a sensing result of a managed sub-area, and send the sensing result to the sensing network element; and the sensing network element, configured to receive a plurality of sensing results from a plurality of first nodes, and determine a sensing result of a sensing area based on sensing results in a plurality of sub-areas, where the sensing area includes the plurality of sub-areas.

In yet another aspect, an embodiment of the present disclosure provides a sensing network element. The sensing network element includes: a processing unit and a communication unit; the communication unit is configured to receive a plurality of sensing results from a plurality of first nodes, where each sensing result of the plurality of sensing results represents a sensing result within a sub-area managed by a corresponding first node; and the processing unit is configured to determine a sensing result of a sensing area based on sensing results in a plurality of sub-areas, where the sensing area includes the plurality of sub-areas.

In yet another aspect, an embodiment of the present disclosure provides a first node. The first node includes: a processing unit and a communication unit; the communication unit is configured to acquire sensing detection data of sensing nodes within a managed sub-area; the processing unit is configured to, in a case where the sensing detection data represents that a sensing target is located in the sub-area managed by the first node, determine a sensing result of the sub-area based on the sensing detection data; and the communication unit is configured to send the sensing result to a sensing network element.

In yet another aspect, an embodiment of the present disclosure provides a communication apparatus. The communication apparatus includes: a memory and a processor; the memory and the processor are coupled; the memory is configured to store computer programs; and the processor, when executing the computer programs, implements the sensing processing method described in any one of the above aspects.

In yet another aspect, an embodiment of the present disclosure provides a computer-readable storage medium, where the computer-readable storage medium has computer program instructions stored thereon, and the computer program instructions, when executed by a processor, cause the processor to implement the sensing processing method described in any one of the above aspects.

In yet another aspect, an embodiment of the present disclosure provides a computer program product, where the computer program product includes computer program instructions, and the computer program instructions, when executed by a processor, cause the processor to implement the sensing processing method described in any one of the above aspects.

### BRIEF DESCRIPTION OF THE DRAWINGS

In order to illustrate technical solutions in the present disclosure more clearly, the drawings required to be used in some embodiments of the present disclosure will be briefly introduced below. Obviously, the drawings in the following description are merely drawings of some embodiments of the present disclosure, and for a person of ordinary skill in the art, other drawings may also be obtained according to these drawings.
FIG. 1 is an architectural diagram of a sensing communication system according to some embodiments.
FIG. 2 is an architectural diagram of another sensing communication system according to some embodiments.
FIG. 3 is an architectural diagram of yet another sensing communication system according to some embodiments.
FIG. 4 is an architectural diagram of yet another sensing communication system according to some embodiments.
FIG. 5 is an architectural diagram of yet another sensing communication system according to some embodiments.
FIG. 6 is an architectural diagram of yet another sensing communication system according to some embodiments.
FIG. 7 is a flowchart of a sensing processing method according to some embodiments.
FIG. 8 is a flowchart of another sensing processing method according to some embodiments.
FIG. 9 is a flowchart of yet another sensing processing method according to some embodiments.
FIG. 10 is a flowchart of yet another sensing processing method according to some embodiments.
FIG. 11 is a flowchart of yet another sensing processing method according to some embodiments.
FIG. 12 is a flowchart of yet another sensing processing method according to some embodiments.
FIG. 13 is a flowchart of yet another sensing processing method according to some embodiments.
FIG. 14 is a structural diagram of a sensing network element according to some embodiments.
FIG. 15 is a structural diagram of a first node according to some embodiments.
FIG. 16 is a structural diagram of a communication apparatus according to some embodiments.

### DETAILED DESCRIPTION

The technical solutions in the present disclosure will be described clearly and completely below with reference to the drawings in the present disclosure. Obviously, the described embodiments are merely a part of, rather than all of, the embodiments of the present disclosure. Based on the embodiments in the present disclosure, all other embodiments obtained by a person of ordinary skill in the art without creative efforts shall fall within the protection scope of the present disclosure.

It should be noted that, in the present disclosure, expressions such as "exemplarily" or "for example" are used to represent examples, illustrations, or explanations. Any embodiment or design solution described as "exemplarily" or "for example" in the present disclosure should not be construed as being preferred or more advantageous over other embodiments or design solutions. Specifically, the use of expressions such as "exemplarily" or "for example" is intended to present the related concepts in a detailed manner.

Hereinafter, the terms "first", "second", etc. are merely used for descriptive purposes and cannot be understood as indicating or implying relative importance or implicitly indicating the number of the indicated technical features. Thus, features defined with "first", "second", etc. may explicitly or implicitly include one or more of the features.

In the description of the present disclosure, unless otherwise specified, "/" represents the meaning of "or", and for example, A/B may represent A or B. Herein, "and/or" is merely an association relationship describing associated objects, which represents that three relationships may exist, and for example, A and/or B may represent: only A, A and B, and only B. In addition, "at least one" means one or more, and "a plurality of" means two or more.

The terms involved in the embodiments of the present disclosure are explained below to facilitate the reader's understanding.

### (1) integrated sensing and communication (ISAC)

Integrated sensing and communication refers to integrating sensing capability into a communication system, so that the communication system has both sensing capability and communication capability. The technology is used to transmit information in a wireless channel while sensing the physical characteristics of the surrounding environment by actively recognizing and analyzing the characteristics of the channel, thereby realizing mutual enhancement of communication and sensing capabilities.

The integrated sensing and communication technology is implemented by utilizing wireless signals emitted by communication devices. The wireless signals, while completing the communication capability, may also be used for environment sensing, and the ambient environment information may be analyzed by collecting and analyzing the reflected, scattered of the ambient environment and multipath propagated wireless signals, so that the network side may quickly make decisions, such as issuing control commands, triggering alarms, adjusting communication rates, etc.

### (2) integrated access and backhaul (IAB)

IAB is used for integrated access and backhaul of information among a terminal, a core network, and a server in a communication system.

IAB includes two types of devices: IAB nodes and IAB donors. An IAB donor includes one centralized unit (CU) and one or more distributed units (DU).

An integrated sensing, communication and computing network architecture introduces computing devices on the basis of integrated sensing and communication to provide computing support for data processing in communication and sensing scenarios. The integrated sensing, communication and computing network architecture typically includes a radio access network, user equipment (e.g., an unmanned aerial vehicle), computing devices, and a core network having a sensing server.

The current integrated sensing, communication and computing network architecture is difficult to deal with various complex sensing, communication and computing scenarios, such as the following ones.
1. In some cases, sensing data needs to be processed by a high-complexity algorithm, but the processing capability of a single node is limited and difficult to meet the computing power requirement of the high-complexity algorithm.
2. Faced with different sensing requirements, it is difficult to select a suitable sensing device for sensing, and it is difficult to select a suitable computing device to process the sensing data measured by the sensing device.
3. In actual network deployment, there are usually overlapping areas among a plurality of base station devices, so a plurality pieces of sensing information of overlapping areas are generated, and the information represented by these pieces of sensing information is often not completely the same, thus there is polysemy.

In summary, the current integrated sensing, communication and computing network architecture is difficult to deal with various complex sensing, communication and computing scenarios, resulting in poor sensing effects.

In view of this, the present disclosure provides a sensing, communication and computing network architecture, which may be flexibly expanded and contracted, and supports mutual collaboration among a plurality of sensing, communication and computing nodes. Meanwhile, the present disclosure further provides a sensing, communication and computing interaction procedure based on the network architecture, so as to improve sensing effects.

The implementations of the embodiments of the present disclosure will be described in detail below with reference to the drawings of the specification.

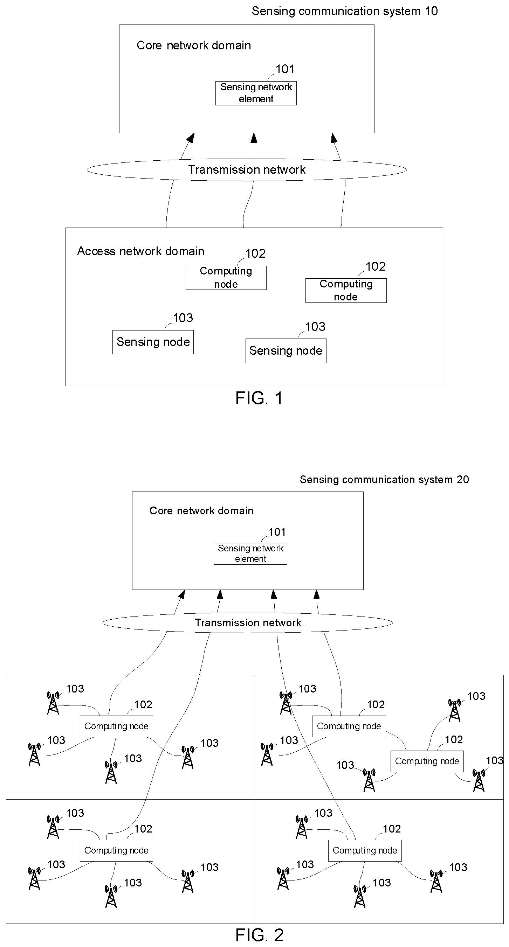

FIG. 1 is an architectural diagram of a sensing communication system 10 according to some embodiments. As shown in FIG. 1, the sensing communication system 10 includes a sensing network element 101, a computing node 102 and a sensing node 103.

The sensing network element 101 may be located on the core network side of the sensing communication system 10. The core network side is mainly used to support capabilities such as communication mobility management, sensing management and control, etc.

The computing node 102 and the sensing node 103 may be located on the access network side of the sensing communication system 10. The access network side is mainly used to support capabilities such as communication, sensing, computing, etc. The devices on the core network side and on the access network side perform data transmission through a transmission network.

In one implementation, the functional entity of the sensing network element 101 may also be deployed on the access network side according to actual requirements, and the present disclosure does not impose limitations on this.

The sensing network element 101 is configured to manage a sensing network, which has a plurality of sensing-related functions such as sensing authorization, capability interaction, network element selection, control, and data processing, for example.

The computing node 102 refers to a node device in the sensing communication system 10 that provides computing power resources. Exemplarily, the computing node 102 may be a server, a computing power board or another type of computing device.

The sensing node 103 refers to a device, a module, or a component in the sensing communication system 10 that has both communication capability and sensing capability, and is configured to transmit and receive data, communication signals, sensing signals or control information, etc. Exemplarily, the sensing node 103 may be an access network device such as a base station, a relay station, an IAB node, or may be user equipment such as a terminal.

It should be noted that the computing node 102 may be deployed independently, or may be deployed together with the sensing node 103. For example, the computing node 102 may be a base station, a relay station, an IAB node, or a terminal to which computing capabilities and resources are allocated. In this case, these devices belong to both the computing node 102 and the sensing node 103, and the present disclosure does not impose limitations on this.

In one implementation, the sensing communication system 10 may further include a communication network element. The communication network element is configured to manage a communication network, for example, to implement core services such as data transmission, signaling processing, and network management, etc. in the communication network. The communication network element not only can process and forward a large amount of data traffic, but also can support various signaling processing and network management functions, thereby ensuring the normal operation of the communication network. The functions of the sensing network element may be determined according to an actual communication network, and the present disclosure does not impose limitations on this. For example, the communication-related functions of the sensing network element are implemented by a separate functional entity, i.e., the communication network element.

The access network device includes but is not limited to: an access point (AP) in a WiFi system, such as a home gateway, a router, a server, a switch, a bridge, etc., an evolved NodeB (eNB), a radio network controller (RNC), a NodeB (NB), a base station controller (BSC), a base transceiver station (BTS), a home base station (e.g., home evolved NodeB, or home NodeB, HNB), a base band unit (BBU), a wireless relay node, a wireless backhaul node, a transmission point (transmission and reception point, TRP or transmission point, TP), etc., and may also be a 5G base station, such as a gNB in a new radio (NR) system, or a transmission point (TRP or TP), one or a group of antenna panels (including a plurality of antenna panels) of a base station in a 5G system, or may also be a network node constituting the gNB or the transmission point, such as a baseband unit (BBU), or a distributed unit (DU), a road side unit (RSU) having a base station capability, or an 5G radio access network (NG radio access network, NG-RAN) device, etc. The access network device further includes base stations in different networking modes, such as a master evolved base station (master evolved NodeB, MeNB), a secondary base station (secondary eNB, SeNB, or secondary gNB, SgNB). The access network device further includes different types, for example, a ground base station, an air base station, a satellite base station, and the like.

A terminal is a device having a wireless communication capability, and may be deployed on land, including indoors or outdoors, hand-held or vehicle-mounted. It may also be deployed on water (such as a ship, etc.), and may also be deployed in the air (such as on an airplane, a balloon, a satellite, etc.). The terminal is also referred to as user equipment (UE), a mobile station (MS), a mobile terminal (MT), a terminal device, and the like, and is a device that provides voice and/or data connectivity to a user. For example, the terminal includes a handheld device, a vehicle-mounted device, etc. having a wireless connection capability. Currently, the terminal may be: a mobile phone, a tablet computer, a notebook computer, a palmtop computer, a mobile internet device (MID), a wearable device (e.g., a smart watch, a smart bracelet, a pedometer, etc.), a vehicle-mounted device (e.g., an automobile, a bicycle, an electric vehicle, an airplane, a ship, a train, a high-speed rail, etc.), a virtual reality (VR) device, an augmented reality (AR) device, a wireless terminal in industrial control, a smart home device (e.g., a refrigerator, a television, an air conditioner, an electric meter, etc.), an intelligent robot, workshop equipment, a wireless terminal in self driving, a wireless terminal in remote medical surgery, a wireless terminal in a smart grid, a wireless terminal in transportation safety, a wireless terminal in a smart city, or a wireless terminal in a smart home, a flight device (e.g., an intelligent robot, a hot air balloon, an unmanned aerial vehicle, an airplane), etc. In an application scenario of the present disclosure, the terminal device is a terminal device that often works on the ground, for example, a vehicle-mounted device. In the present disclosure, for convenience of description, a chip deployed in the above device, for example, a System-On-a-Chip (SOC), a baseband chip, etc., or other chips having a communication capability may also be referred to as a terminal.

The terminal may be a vehicle having a corresponding communication capability, or a vehicle-mounted communication apparatus, or another embedded communication apparatus, or may be a user handheld communication device, including a mobile phone, a tablet computer, etc.

As an example, in embodiments of the present disclosure, the terminal may also be a wearable device. The wearable device may also be referred to as a wearable smart device, which is a general term for devices that are intelligently designed and developed for daily wear by applying wearable technology (such as glasses, gloves, watches, clothing, shoes, and the like). The wearable device is a portable device that is directly worn on the body, or integrated into the user's clothing or accessories. The wearable device is not only a hardware device, but also realizes powerful capabilities through software support, data interaction, and cloud interaction. Broadly, wearable smart devices include those with complete functions and large sizes that can realize complete or partial functions without relying on a smart phone, for example, smart watches, smart glasses, or the like, and those that only focus on a certain type of application function and need to be used in conjunction with other devices such as a smart phone, such as various smart bracelets for vital sign monitoring, smart jewelry, etc.

As an embodiment, the sensing network in the present disclosure is divided and managed based on a grid manner. With reference to FIG. 1, as shown in FIG. 2, the coverage area of the sensing network is divided into a plurality of sub-areas. A sub-area includes a computing node 102 and a sensing node 103.

Each sub-area corresponds to one first node, the first node is a computing node 102 in the sub-area, the first node is connected to other computing nodes 102 in the sub-area, and the computing node 102 is connected to one or more sensing nodes 103. The first node is connected to the sensing network element 101 through a transmission network.

It should be noted that the computing node 102 serving as the first node may also be connected to one or more sensing nodes 103.

The first node is configured to determine a sensing result of a managed sub-area, and send the sensing result to the sensing network element 101.

The sensing network element 101 is configured to receive a plurality of sensing results from a plurality of first nodes, and determine a sensing result of a sensing area based on sensing results in a plurality of sub-areas.

Each sensing result represents a sensing result within a sub-area managed by a corresponding first node. The sensing area includes a plurality of sub-areas. The first node corresponding to a sub-area is configured to manage the sensing nodes 103 and the computing nodes 102 in the sub-area.

In one implementation, the sensing network element 101 is further configured to send first request messages to the plurality of first nodes.

The first node is further configured to receive the first request message sent from the sensing network element 101, and trigger the sensing nodes 103 in the sub-area managed by the first node to perform sensing detection.

A first request message is used to request a first node to trigger sensing nodes 103 in the sub-area managed by the first node to perform sensing detection.

Thus, the sensing network element 101 may determine a sensing area based on a sensing requirement of an application layer, thereby determining a plurality of sub-areas included in the sensing area, and instruct the first nodes corresponding to the plurality of sub-areas to trigger the sensing detection of the sensing nodes 103 in the sub-areas.

Exemplarily, the sensing network element 101 is further configured to send resource configuration messages to the plurality of first nodes.

The first node is further configured to receive the resource configuration message sent from the sensing network element 101.

A resource configuration message is used to configure sensing resources of the computing node 102 and the sensing node 103 within a sub-area. The sensing resources include signal resources in dimensions such as time domain, frequency domain, beam, etc., and signal transmission and reception mode configuration parameters.

In one implementation, the sensing network element 101 is further configured to acquire a coverage capability of each sensing node 103 and a computing capability of each computing node 102 within a sensing network, and divide a coverage area of the sensing network into a plurality of sub-areas based on the coverage capability of each sensing node 103 and the computing capability of each computing node 102 within the sensing network.

At least one computing node 102 and at least one sensing node 103 exist in each sub-area of the plurality of sub-areas.

In one implementation, there is neither an uncovered area nor an overlapping area between any two adjacent sub-areas.

That is to say, the sub-areas in the present disclosure are seamlessly connected, and within the coverage area of the sensing network, there is neither coverage hole nor overlap between sub-areas. Therefore, a target sensed by the sensing node 103 always belongs to a certain sub-area, so as to facilitate the management and maintenance of the sensing target by the first node of each sub-area.

Exemplarily, a sub-area may be a standard polygon, for example, a cuboid, a triangular prism, a hexagonal prism, etc. As shown in FIG. 2, the coverage area of the sensing network is divided into 4 cuboid-shaped sub-areas (FIG. 2 is a schematic diagram from a top view, without reflecting height information).

Thus, the sensing network element 101 may define the location information, such as shape, position, coverage area, etc., of a sub-area based on the vertex coordinates of the standard polygon, so as to facilitate seamless connection among the sub-areas and facilitate the segmentation of the sensing network.

The height of the sub-area may be set according to actual requirements, for example, the height of a sub-area is determined by setting a minimum height and a maximum height.

The sub-areas may also be divided in other ways, as long as coverage holes between sub-areas are filled and there is no overlap between sub-areas, and the present disclosure does not impose limitations on this.

Exemplarily, the division of the sub-areas in the present disclosure may be performed in a horizontal dimension, or may be performed in a vertical dimension.

In one implementation, a coverage area of a sensing network may be divided into a plurality of sub-areas in a horizontal dimension. The division manner may refer to the above description.

In yet another implementation, a coverage area of a sensing network is divided into a plurality of layers in a vertical dimension, and each layer is divided into one or more sub-areas in the horizontal dimension. Thus, for service areas of some special terrains, for example, high terrain buildings such as an office building, signal sensing can also be performed according to the technical solution provided by the present disclosure.

Exemplarily, the sensing network element 101 may perform the sub-area division operation in an initialization phase or in a sub-area change phase, and in addition, after performing the sub-area division, the sensing network element 101 may also assign a first node to each sub-area.

In one implementation, the sensing network element 101 is further configured to, in a case where only one computing node 102 exists in a sub-area, take the computing node 102 as the first node corresponding to the sub-area; or in a case where a plurality of computing nodes 102 exist in a sub-area, select one computing node 102 from the plurality of computing nodes 102 as the first node corresponding to the sub-area based on location information of the plurality of computing nodes 102.

Exemplarily, the sensing network element 101 may determine the transmission link distances between computing nodes 102 and the transmission link distances between computing nodes 102 and sensing nodes 103, thereby determining the first node corresponding to the sub-area based on the transmission link distances, that is, select the computing node 102 whose transmission link distances with other computing nodes 102 and with the sensing nodes 103 are both relatively short as the first node, thereby ensuring data transmission efficiency.

Exemplarily, the sensing network element 101 may also determine coverage areas of the sensing nodes 103 connected to each computing node 102, and take the computing node 102 with the largest overlapping area between the coverage areas and the corresponding sub-area as the first node of the sub-area, thereby reducing the interaction requirement among the computing nodes 102.

In one implementation, the sensing network element 101 may also determine the computing power resource requirement of the first node corresponding to each sub-area according to the task category of sensing computation, and for example, the sensing computation task includes target deduplication in an overlapping area of the sensing area, etc.

In one implementation, the sensing network element 101 is further configured to send sub-area information to a first node corresponding to each sub-area.

The first node is further configured to receive the sub-area information sent from the sensing network element 101.

The sub-area information includes an identifier of each sub-area and range information of each sub-area.

Exemplarily, the range information of the sub-area may be represented by vertex coordinates of the sub-area.

In one implementation, the first node is further configured to, in a case where the sensing detection data represents that the sensing target is located in another sub-area, send the sensing detection data of the sensing target to the first node corresponding to the another sub-area.

The sensing detection data includes at least one of: an identifier, latitude and longitude information, height, distance, speed, acceleration, azimuth, and pitch angle of the sensing target, type of the sensing target, signal strength of the sensing target, or signal-to-noise ratio of the sensing target. It should be noted that since the coverage area of a sensing node 103 is not directly related to the division of sub-areas, the coverage area of a sensing node 103 may cover other sub-areas. Therefore, a sensing target sensed by a first node may also be located in another sub-area, and in this case, the first node may send the data information related to the sensing target to a first node corresponding to the another sub-area, so that the first node corresponding to the another sub-area performs fusion processing on the data of the sensing target.

Exemplarily, the first node corresponding to the another sub-area, after performing fusion processing on the data of the sensing target, reports it to the sensing network element 101, and simultaneously returns the processed data information to the first node of the original sub-area. In this case, for the first node of the original sub-area, the first node may send the sensing result to the sensing network element 101 within a preset time.

In one implementation, the first node is further configured to, in a case where an abnormality occurs in the first node, send abnormal alarm information to the sensing network element 101.

The sensing network element 101 is configured to receive the abnormal alarm information sent from the first node.

It should be noted that in a case where an abnormal situation occurs, the first node cannot work normally, and in this case, it may be determined whether there is computing power redundancy in a first node of an adjacent sub-area. In a case where there is no computing power redundancy, the first node may send abnormal alarm information to the sensing network element 101, thereby indicating that the sub-area managed by the first node is an invalid area.

The first node is further configured to, in a case where an abnormality occurs in the first node, send a second request message to an adjacent first node. The second request message is used to request the adjacent first node to assist in managing the sub-area corresponding to the first node.

In a case where there is computing power redundancy in the first node of the adjacent sub-area, the first node may send a request message to the adjacent first node to request the adjacent first node to assist in managing the sub-area corresponding to the first node. In this case, the adjacent first node may establish transmission links with other computing nodes 102 and sensing nodes 103 within this sub-area, and uniformly process the sensing tasks of this sub-area and the sub-area corresponding to itself.

For the case where a sensing node 103 cannot work normally, the first node is configured to take the coverage area corresponding to the sensing node 103 as an invalid area, and send abnormal alarm information to the sensing network element 101.

In one implementation, the adjacent first node is further configured to, in a case where an abnormality occurs in the adjacent first node, send a third request message to the first node.

Correspondingly, the first node is configured to receive the third request message sent from the adjacent first node.

The third request message is used to request the first node to assist in managing the sub-area corresponding to the adjacent first node.

The first node is further configured to determine a target sensing result based on the sensing detection data of sensing nodes 103 within the sub-area corresponding to the first node and the sub-area corresponding to the adjacent first node, and send the target sensing result to the sensing network element 101.

The sensing communication system provided by the present disclosure is introduced below in combination with scenarios.

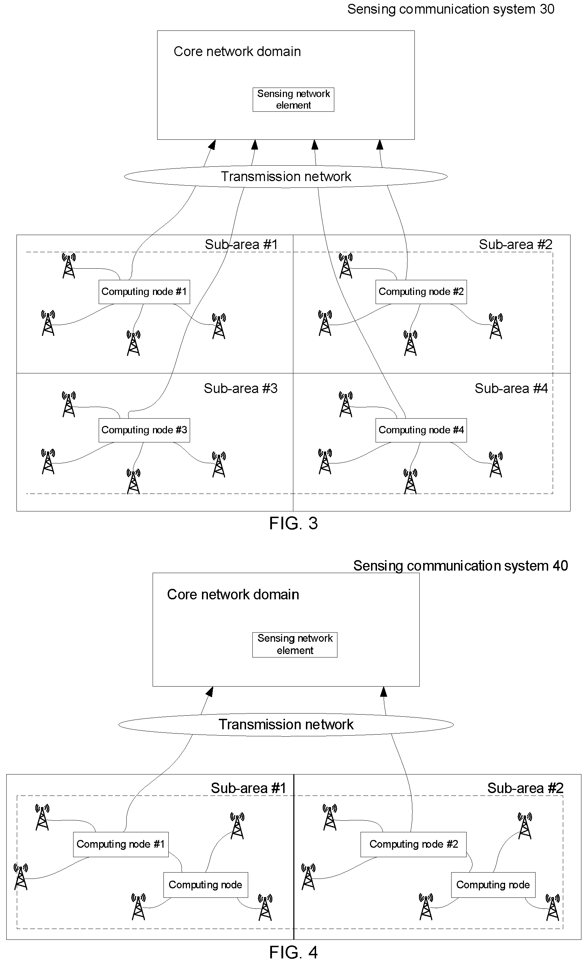

As shown in FIG. 3, FIG. 3 is an architectural diagram of a sensing communication system 30 according to some embodiments, corresponding to an application scenario of cuboid sub-area division and a single computing node.

The coverage area of the sensing network is divided into 4 sub-areas, which may be expressed by {sub-area #1, sub-area #2, sub-area #3, sub-area #4}, and each sub-area is a cuboid.

Each sub-area satisfies the following features.
1. The shape of the sub-area is a standard polyhedron.
2. The sensing grids are seamlessly connected, that is, within the coverage area of the sensing network, there is neither coverage hole nor overlap between sub-areas.
3. There is a one-to-one correspondence between the sub-area and the first node.

Exemplarily, the one-to-one mapping relationship between the sub-area and the first node may be expressed as: {{sub-area #1: computing node #1}; {sub-area #2: computing node #2}; {sub-area #3: computing node #3}; {sub-area #4: computing node #4}}. Since there is only one computing node in each sub-area, the computing node is the first node corresponding to the sub-area.

Each first node corresponding to the sub-area maintains the sub-area information within the coverage area of the sensing network, and for example, the computing node #1 maintains the information of {{sub-area #1: computing node #1}; {sub-area #2: computing node #2}; {sub-area #3: computing node #3}; {sub-area #4: computing node #4}}. When the sub-area information is generated and updated, each first node corresponding to the sub-area also needs to generate and update.

Exemplarily, the dashed box in FIG. 3 indicates a sensing area that needs to be sensed, involving 4 sub-areas. The sensing network element determines, based on the sensing area, that the above computing node #1, computing node #2, computing node #3, and computing node #4 all need to perform sensing detection.

Taking computing node #1 as an example, in a case where the position of the sensing target sensed by the computing node #1 is in the sub-area corresponding to the computing node #2, the computing node #1 sends the sensing detection data of the sensing target to the computing node #2. The computing node #2, after performing fusion processing on the sensing detection data of the sensing target, reports the fusion-processed sensing result to the sensing network element, and simultaneously returns the fusion-processed sensing result to the computing node #1. The computing node #1 does not need to report this data.

Each first node corresponding to the sub-area only reports the sensing result in its managed sub-area, and for example, the computing node #1 only reports the sensing result in the sub-area #1. The sensing network element acquires the sensing results of the sub-areas and then performs splicing processing, thereby obtaining the sensing result of the sensing area corresponding to the sensing requirement.

In a case where the computing node #1 cannot work normally and there is redundant computing resources in the computing node #2, the computing node #2 may establish transmission links with each sensing node under the sub-area #1, and merge the sub-area #1 and the sub-area #2 into one sub-area.

As shown in FIG. 4, FIG. 4 is an architectural diagram of a sensing communication system 40 according to some embodiments, corresponding to an application scenario of cuboid sub-area division and multiple computing nodes.

The coverage area of the sensing network is divided into 2 sub-areas, which may be expressed by {sub-area #1, sub-area #2}, and each sub-area is a cuboid.

Each sub-area satisfies the following features.
1. The shape of the sub-area is a standard polyhedron.
2. The sensing grids are seamlessly connected, that is, within the coverage area of the sensing network, there is neither coverage hole nor overlap between sub-areas.
3. There is a one-to-one correspondence between the sub-area and the first node.

Exemplarily, the one-to-one mapping relationship between the sub-area and the first node may be expressed as: {{sub-area #1: computing node #1}; {sub-area #2: computing node #2}}.

Since there are a plurality of computing nodes in each sub-area, the sensing network element needs to select one computing node from the plurality of computing nodes as the first node corresponding to the sub-area. The first node may be connected to the sensing node, or not connected to the sensing node and acts as a pure computing power node.

Each first node corresponding to the sub-area maintains the sub-area information within the coverage area of the sensing network, and for example, the computing node #1 maintains the information of {{sub-area #1: computing node #1}; {sub-area #2: computing node #2}}. When the sub-area information is generated and updated, each first node corresponding to the sub-area also needs to generate and update.

Exemplarily, the dashed box in FIG. 4 indicates a sensing area that needs to be sensed, involving 2 sub-areas. The sensing network element determines, based on the sensing area, that the above computing node #1 and computing node #2 both need to perform sensing detection.

Taking computing node #1 as an example, in a case where the position of the sensing target sensed by the computing node #1 is in the sub-area corresponding to the computing node #2, the computing node #1 sends the sensing detection data of the sensing target to the computing node #2. The computing node #2, after performing fusion processing on the sensing detection data of the sensing target, reports the fusion-processed sensing result to the sensing network element, and simultaneously returns the fusion-processed sensing result to the computing node #1. The computing node #1 does not need to report this data.

Each first node corresponding to the sub-area only reports the sensing result in its managed sub-area, and for example, the computing node #1 only reports the sensing result in the sub-area #1. The sensing network element acquires the sensing results of the sub-areas and then performs splicing processing, thereby obtaining the sensing result of the sensing area corresponding to the sensing requirement.

In a case where some sensing nodes under the computing node #1 are damaged and cannot work, the computing node #1 takes the coverage areas corresponding to these sensing nodes as invalid areas and reports abnormal alarm information to the sensing network element.

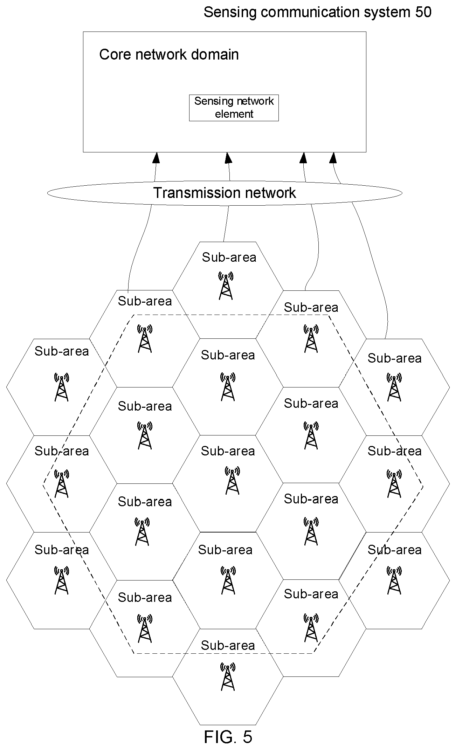

As shown in FIG. 5, FIG. 5 is an architectural diagram of a sensing communication system 50 according to some embodiments, corresponding to an application scenario of hexagonal prism sub-area division and a single computing node.

The coverage area of the sensing network is divided into a plurality of hexagonal prism-shaped sub-areas.

Each sub-area of the plurality of sub-areas satisfies the following features.
1. The shape of the sub-area is a standard polyhedron.
2. The sensing grids are seamlessly connected, that is, within the coverage area of the sensing network, there is neither coverage hole nor overlap between sub-areas.
3. There is a one-to-one correspondence between the sub-area and the first node.

Exemplarily, there is a one-to-one mapping between the sub-area and the first node. Since there is only one computing node in each sub-area, the computing node is the first node corresponding to the sub-area.

Each first node corresponding to the sub-area maintains the sub-area information within the coverage area of the sensing network. When the sub-area information is generated and updated, each first node corresponding to the sub-area also needs to generate and update.

Exemplarily, the dashed box in FIG. 5 indicates a sensing area that needs to be sensed, and the sensing network element determines, based on the sensing area, each first node that needs to perform sensing detection.

Taking computing node #1 as an example, in a case where the position of the sensing target sensed by the computing node #1 is in the sub-area corresponding to the computing node #2, the computing node #1 sends the sensing detection data of the sensing target to the computing node #2. The computing node #2, after performing fusion processing on the sensing detection data of the sensing target, reports the fusion-processed sensing result to the sensing network element, and simultaneously returns the fusion-processed sensing result to the computing node #1. The computing node #1 does not need to report this data.

Each first node corresponding to the sub-area only reports the sensing result in its managed sub-area, and for example, the computing node #1 only reports the sensing result in the sub-area #1. The sensing network element acquires the sensing results of the sub-areas and then performs splicing processing, thereby obtaining the sensing result of the sensing area corresponding to the sensing requirement.

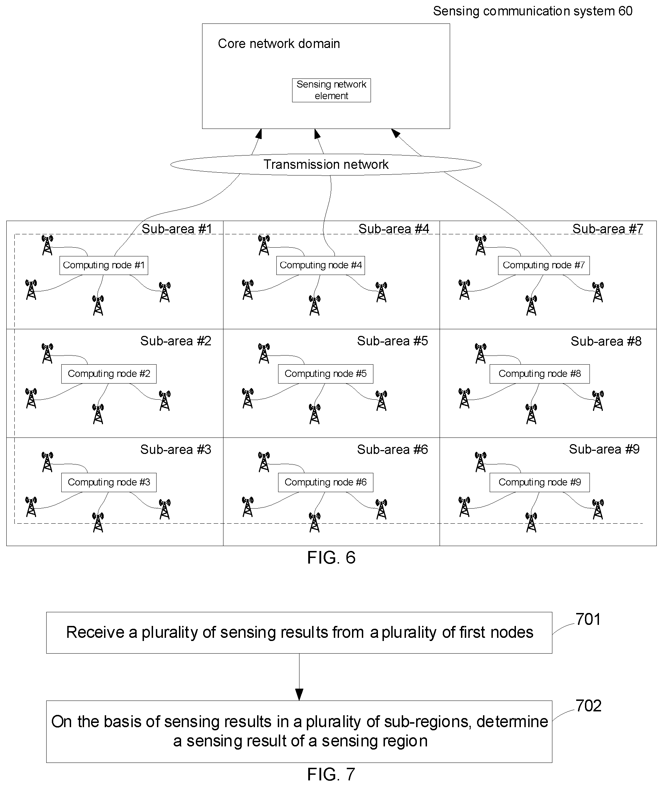

As shown in FIG. 6, FIG. 6 is an architectural diagram of a sensing communication system 60 according to some embodiments, corresponding to an application scenario of cuboid sub-area division and a single computing node.

Compared with the sensing communication system 30 shown in FIG. 3, in the sensing communication system 60 shown in FIG. 6, there are more computing nodes, fewer sensing nodes, and more sub-areas divided by the sensing network element. The rest is similar to the sensing communication system 30, and details are not repeated here.

It should be pointed out that the various embodiments of the present disclosure may be cross-referenced or used for reference to each other. For example, the same or similar steps, and the method embodiments, the system embodiments, and the apparatus embodiments can all be referenced to each other, and the embodiments of the present disclosure do not impose limitations on this.

FIG. 7 is a flowchart of a sensing processing method according to some embodiments. As shown in FIG. 7, the method includes step 701 to step 702.

Step 701: a sensing network element receives a plurality of sensing results from a plurality of first nodes.

Each sensing result represents a sensing result within a sub-area managed by a corresponding first node. The first node corresponding to a sub-area is configured to manage sensing nodes and computing nodes in the sub-area.

It should be noted that the coverage area of the sensing network includes a plurality of sub-areas, and there is neither an uncovered area nor an overlapping area between any two adjacent sub-areas. That is to say, the sub-areas in the present disclosure are seamlessly connected, and within the coverage area of the sensing network, there is neither coverage hole nor overlap between sub-areas.

Exemplarily, a sub-area may be a standard polygon, for example, a cuboid, a triangular prism, a hexagonal prism, etc. Thus, the sensing network element may define the location information, such as shape, position, coverage area, etc., of a sub-area based on the vertex coordinates of the standard polygon, so as to facilitate seamless connection among the sub-areas and facilitate the segmentation of the sensing network.

The height of the sub-area may be set according to actual requirements, for example, the height of a sub-area is determined by setting a minimum height and a maximum height.

The sub-areas may also be divided in other ways, as long as coverage holes between sub-areas are filled and there is no overlap between sub-areas, and the present disclosure does not impose limitations on this.

Exemplarily, the division of the sub-areas in the present disclosure may be performed in a horizontal dimension, or may be performed in a vertical dimension.

In one implementation, a coverage area of a sensing network may be divided into a plurality of sub-areas in a horizontal dimension. The division manner may refer to the above description.

In yet another implementation, a coverage area of a sensing network is divided into a plurality of layers in a vertical dimension, and each layer of the plurality of layers is divided into one or more sub-areas in the horizontal dimension. Thus, for service areas of some special terrains, for example, high terrain buildings such as an office building, signal sensing can also be performed according to the technical solution provided by the present disclosure.

Step 702: the sensing network element determines a sensing result of a sensing area based on sensing results in a plurality of sub-areas.

The sensing area includes the plurality of sub-areas.

In one implementation, the sensing network element may determine the sensing area according to a sensing requirement.

It should be noted that the sensing area is not directly related to the sub-areas divided by the coverage area of the sensing network. The sensing area is determined by the sensing network element according to a current requirement. In a case where there is a sensing requirement, the sensing network element may determine the involved sensing area based on the sensing requirement. Thus, the sensing network element may instruct the first nodes corresponding to the plurality of sub-areas covered by the sensing area to perform relevant sensing detection operations, thereby acquiring the corresponding sensing results.

Based on the above technical solution, the present disclosure may perform area division on the sensing network by means of sensing grids. Since each sub-area corresponds to a first node, the sensing network element may acquire sensing results in the corresponding sub-areas from the involved plurality of first nodes, and determine the sensing result of the sensing area according to the sensing results of the plurality of sub-areas. Thus, the technical solution proposed by the present disclosure may flexibly perform the sensing operation to deal with various sensing, communication and computing scenarios, thereby improving sensing effects.

The process of the sensing network element instructing the first node to perform sensing detection is introduced below.

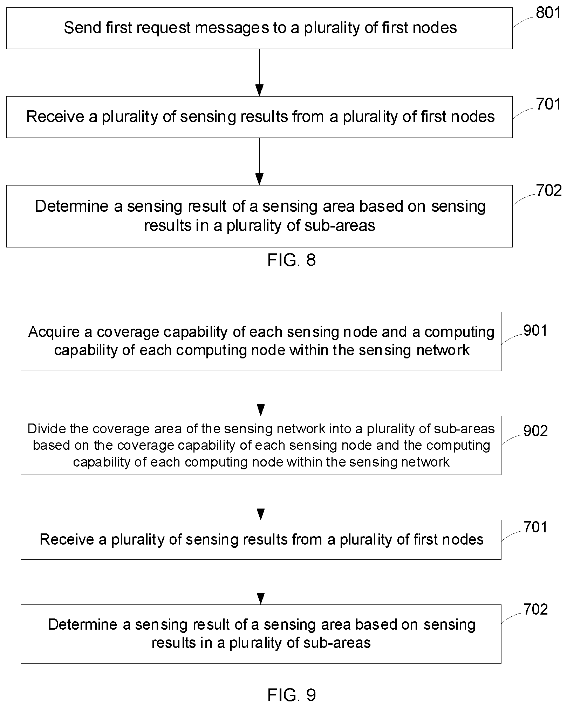

As an embodiment of the present disclosure, with reference to FIG. 7, as shown in FIG. 8, before the above step 701, the method further includes step 801.

Step 801: the sensing network element sends first request messages to a plurality of first nodes.

The first request message is used to request a first node to trigger sensing nodes in the sub-area managed by the first node to perform sensing detection.

Exemplarily, in a case where there is a transmission link between the first node and a sensing node, the first node may, after receiving the first request message, directly instruct the sensing node to perform sensing detection.

In a case where the first node establishes a connection with a sensing node through another computing node, the first node may instruct the sensing node to perform sensing detection through the another computing node.

In one implementation, the sensing network element may further send resource configuration messages to the plurality of first nodes.

A resource configuration message is used to configure sensing resources of computing nodes and sensing nodes in a sub-area. For example, the sensing resources include signal resources in dimensions such as time domain, frequency domain, beam, etc., and signal transmission and reception mode configuration parameters.

The process of the sensing network element performing area division is introduced below.

As an embodiment of the present disclosure, with reference to FIG. 7, as shown in FIG. 9, the method further includes step 901 to step 902.

Step 901: the sensing network element acquires a coverage capability of each sensing node and a computing capability of each computing node within the sensing network.

The coverage capability of a sensing node refers to the maximum range in which the sensing node can perform target sensing. The stronger the coverage capability of a sensing node is, the larger the range in which the sensing node performs target sensing, and the larger the range of a sub-area that can be divided by the sensing network element. The stronger the computing capability of a computing node is, the larger the amount of sensing detection data that can be processed by the computing node, and the larger the number of sensing nodes that can be managed by the computing node.

Step 902: the sensing network element divides the coverage area of the sensing network into a plurality of sub-areas based on the coverage capability of each sensing node and the computing capability of each computing node within the sensing network.

At least one computing node and at least one sensing node exist in each sub-area.

It should be noted that the present disclosure does not put limitation on the execution order of step 901 to step 902 and the above step 701 to step 702, and the sensing network element may perform the sub-area division operation in an initialization phase or in a sub-area change phase. For example, as shown in FIG. 9, in a case where the sensing network element performs sub-area division in the initialization phase, the above step 901 to step 902 are executed before step 701. The above step 901 to step 902 may also be executed at any other timing, and the present disclosure does not impose limitations on this.

In addition, after performing the sub-area division, the sensing network element may also assign a first node to each sub-area.

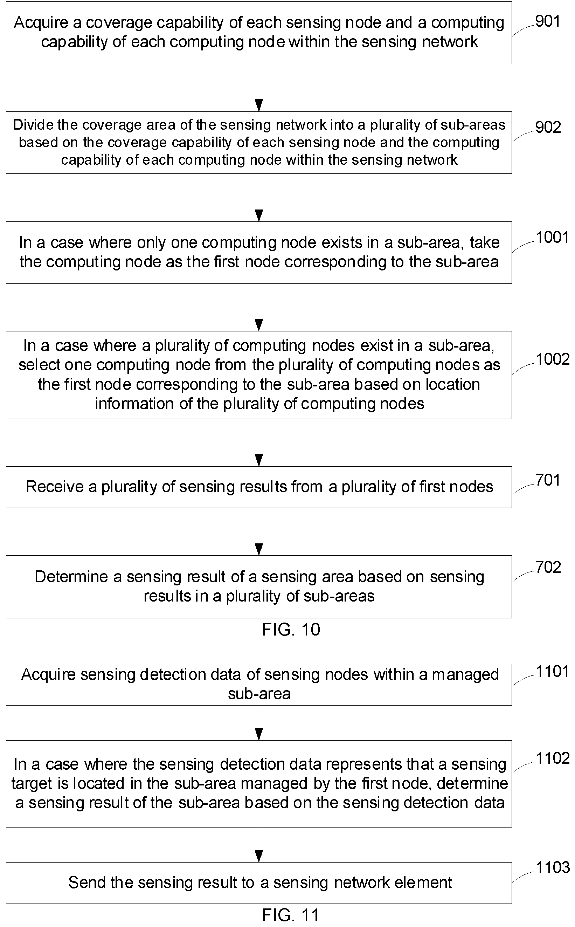

As an embodiment of the present disclosure, with reference to FIG. 9, as shown in FIG. 10, the method further includes step 1001 to step 1002.

Step 1001: in a case where only one computing node exists in a sub-area, the sensing network element takes the computing node as the first node corresponding to the sub-area.

Step 1002: in a case where a plurality of computing nodes exist in a sub-area, the sensing network element selects one computing node from the plurality of computing nodes as the first node corresponding to the sub-area based on location information of the plurality of computing nodes.

Exemplarily, the sensing network element may determine the transmission link distances between computing nodes and the transmission link distances between computing nodes and sensing nodes, thereby determining the first node corresponding to the sub-area based on the transmission link distances, that is, select the computing node whose transmission link distances with other computing nodes and with the sensing nodes are both relatively short as the first node, thereby ensuring data transmission efficiency.

Exemplarily, the sensing network element may also determine coverage areas of the sensing nodes connected to each computing node, and take the computing node with the largest overlapping area between the coverage areas and the corresponding sub-area as the first node of the sub-area, thereby reducing the interaction requirement among the computing nodes.

In one implementation, the sensing network element sends sub-area information to a first node corresponding to each sub-area.

The sub-area information includes an identifier of each sub-area and range information of each sub-area.

Based on the above technical solution, when the sensing network performs initialization or when the sensing network needs to perform area update, the sensing network element may perform sub-area division of the sensing network and assign corresponding first nodes to the divided sub-areas, thereby being able to realize flexible expansion and contraction of the sensing network to adapt to various sensing scenarios, thereby improving sensing effects.

FIG. 11 is a flowchart of a sensing processing method according to some embodiments. As shown in FIG. 11, the method includes steps 1101 to 1103.

Step 1101: a first node acquires sensing detection data of sensing nodes within a managed sub-area.

The sensing detection data includes at least one of: an identifier, latitude and longitude information, height, distance, speed, acceleration, azimuth, and pitch angle of the sensing target, type of the sensing target, signal strength of the sensing target, or signal-to-noise ratio of the sensing target.

Exemplarily, in a case where there is a transmission link between the first node and a sensing node, the first node may receive the sensing detection data of the sensing node.

In a case where the first node establishes a connection with a sensing node through another computing node, the first node may acquire the sensing detection data of the sensing node connected to the another computing node through the another computing node.

In one implementation, after receiving the first request message sent from the sensing network element, the first node triggers sensing nodes in the managed sub-area to perform sensing detection.

The first request message is used to request a first node to trigger sensing nodes in the sub-area managed by the first node to perform sensing detection.

Step 1102: in a case where the sensing detection data represents that a sensing target is located in the sub-area managed by the first node, the first node determines a sensing result of the sub-area based on the sensing detection data.

Since there may be overlap in the coverage areas between the sensing nodes, the first node may acquire a plurality pieces of sensing detection data for a same sensing target. Therefore, the first node may, after acquiring the sensing detection data, perform fusion processing on the sensing detection data, thereby determining the sensing result of the sub-area. Thus, the first node not only can eliminate the polysemy existing in the sensing results, but also can improve the sensing accuracy performance.

It should be noted that since the coverage area of a sensing node is not directly related to the division of sub-areas, the coverage area of a sensing node may cover other sub-areas. Therefore, the sensing target sensed by the first node may also be located in another sub-area.

In one implementation, in a case where the sensing detection data represents that the sensing target is located in another sub-area, the first node sends the sensing detection data to a first node corresponding to the another sub-area.

Exemplarily, the first node corresponding to the another sub-area, after performing fusion processing on the data of the sensing target, reports it to the sensing network element, and simultaneously returns the processed data information to the first node of the original sub-area. In this case, for the first node of the original sub-area, the first node may send the sensing result to the sensing network element within a preset time. Thus, the first node corresponding to the another sub-area may perform fusion processing based on the sensing detection data to improve the sensing accuracy.

Step 1103: the first node sends the sensing result to a sensing network element.

Based on the above technical solution, the first node in the present disclosure may acquire the sensing detection data from the sensing nodes in the managed sub-area, process the sensing detection data, determine the sensing result of the sub-area, and send the sensing result to the sensing network element. Thus, the technical solution proposed by the present disclosure may flexibly perform the sensing operation to deal with various sensing, communication and computing scenarios, thereby improving sensing effects.

The abnormal processing process of the first node is introduced below.

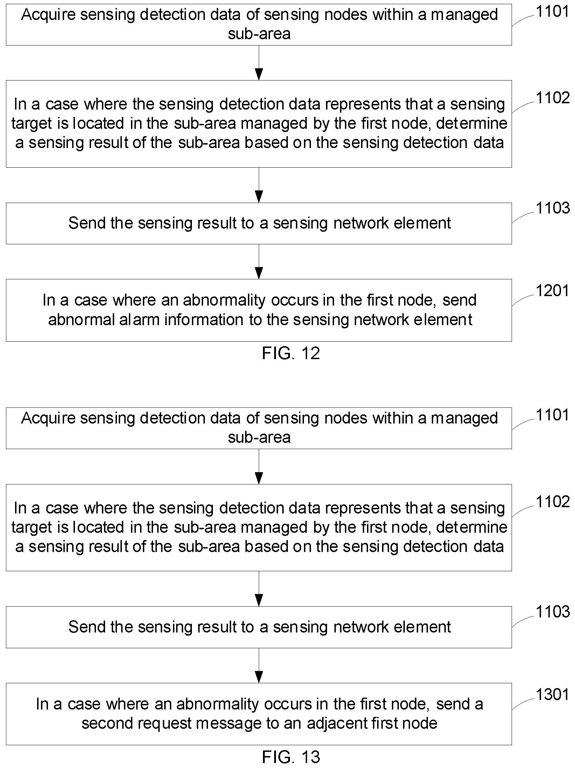

As an embodiment of the present disclosure, with reference to 11, as shown in FIG. 12, the method further includes step 1201.

Step 1201: in a case where an abnormality occurs in the first node, the first node sends abnormal alarm information to the sensing network element.

The abnormal alarm information is used to indicate that the sub-area corresponding to the first node is an invalid area.

In one implementation, in a case where an abnormality occurs in a sensing node within the sub-area corresponding to the first node, the first node takes the coverage area corresponding to the sensing node as an invalid area. The first node may also report this abnormal alarm information to the sensing network element.

It should be noted that in a case where an abnormal situation occurs, the first node cannot work normally, and in this case, it may be determined whether there is computing power redundancy in a first node of an adjacent sub-area. In a case where there is no computing power redundancy, the first node may send abnormal alarm information to the sensing network element, thereby indicating that the sub-area managed by the first node is an invalid area.

As an embodiment of the present disclosure, with reference to 11, as shown in FIG. 13, the method further includes step 1301.

Step 1301: in a case where an abnormality occurs in the first node, the first node sends a second request message to an adjacent first node.

The second request message is used to request the adjacent first node to assist in managing the sub-area corresponding to the first node.

In a case where there is computing power redundancy in the first node of the adjacent sub-area, the first node may send a request message to the adjacent first node to request the adjacent first node to assist in managing the sub-area corresponding to the first node. In this case, the adjacent first node may establish transmission links with other computing nodes and sensing nodes within this sub-area, and uniformly process the sensing tasks of this sub-area and the sub-area corresponding to itself.

Exemplarily, the sensing network element may also re-divide the sub-areas after the sensing nodes and the computing nodes deployed in the sensing network are changed. After the sub-area division is completed, each first node reacquires the sub-area information to facilitate the execution of the sensing detection operation.

In a case where an abnormality occurs in an adjacent first node, the first node may also assist the adjacent first node in managing its corresponding sub-area based on the above manner.

In one implementation, in a case where an abnormality occurs in an adjacent first node, the adjacent first node sends a third request message to the first node. Correspondingly, the first node receives the third request message sent from the adjacent first node.

The third request message is used to request the first node to assist in managing the sub-area corresponding to the adjacent first node.

The first node determines a target sensing result based on sensing detection data of sensing nodes within the sub-area corresponding to the first node and the sub-area corresponding to the adjacent first node, and sends the target sensing result to the sensing network element. Correspondingly, the sensing network element receives the target sensing result sent from the first node. Thus, even if an abnormality occurs in the adjacent first node, the sensing network element may still normally acquire the data in its sub-areas to realize target sensing.

In one implementation, the first node receives the sub-area information sent from the sensing network element.

The sub-area information includes an identifier of each sub-area and range information of each sub-area.

Based on the above technical solution, after an abnormality occurs, the first node may report the abnormal information to the sensing network element, or may request the adjacent first node to assist in managing the sub-area corresponding to the first node, thereby avoiding the influence on the target sensing and ensuring the normal execution of the target sensing.

It is understandable that, in order to realize the above functions, the communication apparatus includes corresponding hardware structures and/or software modules for executing each function. A person skilled in the art should easily realize that, in combination with the algorithm steps of the various examples described in the embodiments of the present disclosure, the present disclosure may be implemented in the form of hardware or a combination of hardware and computer software. Whether a certain function is executed by hardware or by computer software driving hardware depends on the specific application and design constraints of the technical solution. A professional technician may use different methods for each specific application to implement the described function, but such implementation should not be considered as exceeding the scope of the present disclosure.

In the embodiments of the present disclosure, the communication apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The following description will be given by taking the division of each function module corresponding to each function as an example.

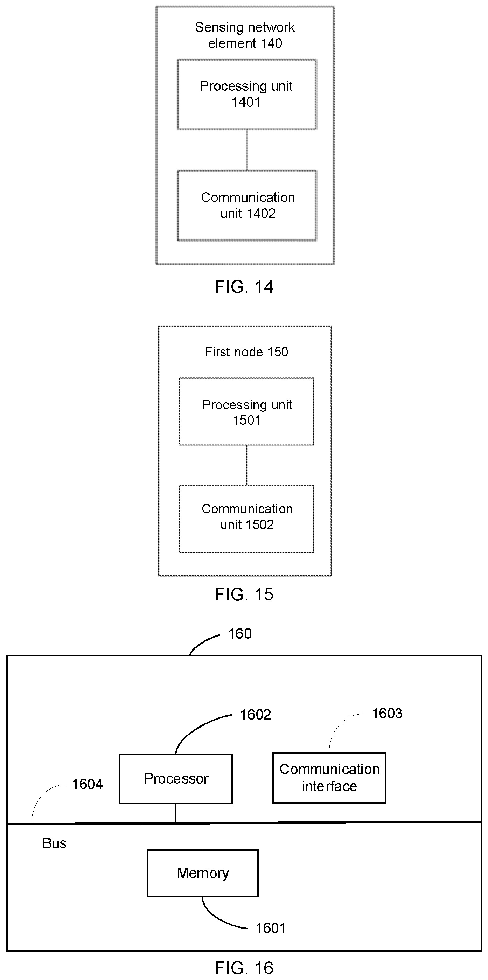

For example, taking the communication apparatus as the sensing network element in the above method embodiments as an example, FIG. 14 is a structural diagram of a sensing network element according to some embodiments, and the sensing network element may execute the sensing processing method provided by the above method embodiments. As shown in FIG. 14, the sensing network element 140 includes a processing unit 1401 and a communication unit 1402.

The communication unit 1402 is configured to receive a plurality of sensing results from a plurality of first nodes, where each sensing result of the plurality of sensing results represents a sensing result within a sub-area managed by a corresponding first node.

The processing unit 1401 is configured to determine a sensing result of a sensing area based on sensing results in a plurality of sub-areas, where the sensing area includes the plurality of sub-areas.

In some embodiments, the first node corresponding to the sub-area is configured to manage sensing nodes and computing nodes in the sub-area.

In some embodiments, the communication unit 1402 is configured to send first request messages to a plurality of first nodes, where a first request message is used to request a first node to trigger sensing nodes in the sub-area managed by the first node to perform sensing detection.

In some embodiments, the communication unit 1402 is configured to acquire a coverage capability of each sensing node and a computing capability of each computing node within the sensing network; and the processing unit 1401 is configured to divide a coverage area of the sensing network into a plurality of sub-areas based on the coverage capability of each sensing node and the computing capability of each computing node within the sensing network, where at least one computing node and at least one sensing node exist in each sub-area.

In some embodiments, the processing unit 1401 is configured to, in a case where only one computing node exists in a sub-area, take the computing node as the first node corresponding to the sub-area; or the processing unit 1401 is configured to, in a case where a plurality of computing nodes exist in the sub-area, select one computing node from the plurality of computing nodes as the first node corresponding to the sub-area based on location information of the plurality of computing nodes.

In some embodiments, the communication unit 1402 is configured to send sub-area information to a first node corresponding to each sub-area, where the sub-area information includes an identifier of each sub-area and range information of each sub-area.

In some embodiments, there is neither an uncovered area nor an overlapping area between any two adjacent sub-areas.

In some embodiments, a coverage area of a sensing network is divided into a plurality of sub-areas in a horizontal dimension.

In some embodiments, a coverage area of a sensing network is divided into a plurality of layers in a vertical dimension, and each layer of the plurality of layers is divided into one or more sub-areas in a horizontal dimension.

Taking the sensing communication apparatus as the first node in the above method embodiments as an example, FIG. 15 is a structural diagram of a first node according to some embodiments, and the first node can execute the sensing processing method provided by the above method embodiments. As shown in FIG. 15, the first node 150 includes a processing unit 1501 and a communication unit 1502. The communication unit 1502 is configured to acquire sensing detection data of sensing nodes within a managed sub-area.

The processing unit 1501 is configured to, in a case where the sensing detection data represents that a sensing target is located in the sub-area managed by the first node, determine a sensing result of the sub-area based on the sensing detection data.

The communication unit 1502 is configured to send the sensing result to a sensing network element.

In some embodiments, the communication unit 1502 is configured to, in a case where the sensing detection data represents that the sensing target is located in another sub-area, send the sensing detection data to a first node corresponding to the another sub-area.

In some embodiments, the communication unit 1502 is configured to send the sensing result to the sensing network element within a preset time.

In some embodiments, the sensing detection data includes at least one of: an identifier, latitude and longitude information, height, distance, speed, acceleration, azimuth, and pitch angle of the sensing target, type of the sensing target, signal strength of the sensing target, or signal-to-noise ratio of the sensing target.

In some embodiments, the communication unit 1502 is configured to, in a case where an abnormality occurs in the first node, send abnormal alarm information to the sensing network element.

In some embodiments, the communication unit 1502 is configured to, in a case where an abnormality occurs in the first node, send a second request message to an adjacent first node, where the second request message is used to request the adjacent first node to assist in managing the sub-area corresponding to the first node.

In some embodiments, the communication unit 1502 is configured to receive a third request message sent from an adjacent first node, where the third request message is used to request the first node to assist in managing the sub-area corresponding to the adjacent first node; the processing unit 1501 is configured to determine a target sensing result based on sensing detection data of the sensing nodes within the sub-area corresponding to the first node and the sub-area corresponding to the adjacent first node; and the communication unit 1502 is configured to send the target sensing result to the sensing network element.

In some embodiments, the communication unit 1502 is configured to receive sub-area information sent from the sensing network element, where the sub-area information includes an identifier of each sub-area and range information of each sub-area.

In a case where the functions of the above integrated modules are implemented in the form of hardware, an embodiment of the present disclosure provides a structure of the communication apparatus involved in the above embodiments. As shown in FIG. 16, the communication apparatus 160 includes a processor 1602 and a bus 1604. In some embodiments, the communication apparatus 160 may further include a memory 1601; and in some embodiments, the communication apparatus 160 may further include a communication interface 1603.

The processor 1602 may be modules and circuits that implement or perform various exemplary logical blocks described in conjunction with the embodiments of the present disclosure. The processor 1602 may be a central processing unit, a general-purpose processor, a digital signal processor, an application-specific integrated circuit, a field-programmable gate array or other programmable logic devices, transistor logic devices, hardware components, or any combination thereof. The processor 1602 may implement or perform various exemplary logic blocks, modules, and circuits described in combination with the embodiments of the present disclosure. The processor 1602 may also be a combination for implementing computing functions, for example, a combination including one or more microprocessors, a combination of a digital signal processor (DSP) and a microprocessor, etc.

The communication interface 1603 is configured to connect with other devices through a communication network. The communication network may be an Ethernet, a radio access network, a wireless local area network (WLAN), etc.

The memory 1601 may be, but not limited to, a read-only memory (ROM) or another type of static storage device that can store static information and instructions, a random access memory (RAM) or another type of dynamic storage device that can store information and instructions, or may be an electrically erasable programmable read-only memory (EEPROM), a magnetic disk storage medium or other magnetic storage devices, or any other medium that may be configured to carry or store desired program codes in the form of instructions or data structures and may be accessed by a computer.

As an implementation, the memory 1601 may exist independently of the processor 1602, and the memory 1601 may be connected to the processor 1602 via the bus 1604, for storing instructions or program codes. the processor 1602, when calling and executing the instructions or the program codes stored in the memory 1601, is capable of implementing the sensing processing method provided by the embodiments of the present disclosure.

In another implementation, the memory 1601 may also be integrated with the processor 1602.

The bus 1604 may be an extended industry standard architecture (EISA) bus, etc. The bus 1604 may be divided into an address bus, a data bus, a control bus, etc. For convenience of representation, only one thick line is used to represent the bus in FIG. 16, but it does not indicate that there is only one bus or one type of bus.

Some embodiments of the present disclosure provide a computer-readable storage medium (e.g., a non-transitory computer-readable storage medium), and the computer-readable storage medium has computer program instructions stored therein that, when running on a computer, cause the computer to perform the sensing processing method as described in any one of the above embodiments.

Exemplarily, the above computer-readable storage medium may include, but is not limited to: a magnetic storage device (e.g., a hard disk, a floppy disk, a magnetic tape, etc.), an optical disk (e.g., a Compact Disk (CD), a Digital Versatile Disk (DVD), etc.), a smart card and a flash memory device (e.g., an Erasable Programmable Read-Only Memory (EPROM), a card, a stick, a key drive, etc.). Various computer-readable storage media described in the present disclosure may represent one or more devices and/or other machine-readable storage media for storing information. The term "machine-readable storage medium" may include, but is not limited to, a wireless channel and various other media capable of storing, containing, and/or carrying instructions and/or data.

An embodiment of the present disclosure provides a computer program product containing instructions, and the computer program product, when running on a computer, causes the computer to perform the sensing processing method as described in any one of the above embodiments.

The above description is only specific embodiments of the present disclosure, but the protection scope of the present disclosure is not limited thereto. Any changes or substitutions within the scope of the technologies disclosed in the present disclosure should be covered within the protection scope of the present disclosure. Therefore, the protection scope of the present disclosure should be subject to the protection scope of claims.

## Claims

1. A sensing processing method, comprising:
receiving a plurality of sensing results from a plurality of first nodes, wherein each sensing result of the plurality of sensing results represents a sensing result within a sub-area managed by a corresponding first node; and
determining a sensing result of a sensing area based on sensing result of each sub-area of a plurality of sub-areas, wherein the sensing area comprises the plurality of sub-areas.

2. The method according to claim 1, wherein the first node corresponding to the sub-area is configured to manage sensing nodes and computing nodes in the sub-area.

3. The method according to claim 1, wherein before receiving the plurality of sensing results from the plurality of first nodes, the method further comprises:
sending first request messages to the plurality of first nodes, wherein a first request message is used to request a first node to trigger sensing nodes in the sub-area managed by the first node to perform sensing detection.

4. The method according to claim 1, further comprising:
acquiring a coverage capability of each sensing node and a computing capability of each computing node within a sensing network; and
dividing a coverage area of the sensing network into a plurality of sub-areas based on the coverage capability of each sensing node and the computing capability of each computing node within the sensing network, wherein at least one computing node and at least one sensing node exist in each sub-area of the plurality of sub-areas.

5. The method according to claim 4, further comprising:
in a case where only one computing node exists in each sub-area, taking the computing node as the first node corresponding to the sub-area;
in a case where a plurality of computing nodes exist in each sub-area, selecting one computing node from the plurality of computing nodes as the first node corresponding to the sub-area based on location information of the plurality of computing nodes.

6. The method according to claim 1, further comprising:
sending sub-area information to a first node corresponding to each sub-area of the plurality of sub-areas, wherein the sub-area information comprises an identifier of each sub-area of the plurality of sub-areas and range information of each sub-area of the plurality of sub-areas.

7. The method according to claim 1, wherein there is neither an uncovered area nor an overlapping area between any two adjacent sub-areas of the plurality of sub-areas.

8. The method according to claim 1, wherein a coverage area of a sensing network is divided into a plurality of sub-areas in a horizontal dimension.

9. The method according to claim 1, wherein a coverage area of a sensing network is divided into a plurality of layers in a vertical dimension, and each layer of the plurality of layers is divided into one or more sub-areas in a horizontal dimension.

10. A sensing processing method, wherein the method is applied to a first node, and comprises:
acquiring sensing detection data of sensing nodes within a managed sub-area;
in a case where the sensing detection data represents that a sensing target is located in the sub-area managed by the first node, determining a sensing result of the sub-area based on the sensing detection data; and
sending the sensing result to a sensing network element.

11. The method according to claim 10, further comprising:
in a case where the sensing detection data represents that the sensing target is located in another sub-area, sending the sensing detection data to a first node corresponding to the another sub-area.

12. The method according to claim 11, further comprising:
sending the sensing result to the sensing network element within a preset time.

13. The method according to claim 11, wherein the sensing detection data comprises at least one of: an identifier, latitude and longitude information, height, distance, speed, acceleration, azimuth, and pitch angle of the sensing target, type of the sensing target, signal strength of the sensing target, or signal-to-noise ratio of the sensing target.

14. The method according to claim 10, further comprising:
in a case where an abnormality occurs in the first node, sending abnormal alarm information to the sensing network element.

15. The method according to claim 10, further comprising:
in a case where an abnormality occurs in the first node, sending a second request message to an adjacent first node, wherein the second request message is used to request the adjacent first node to assist in managing the sub-area corresponding to the first node.

16. The method according to claim 10, further comprising:
receiving a third request message sent from an adjacent first node, wherein the third request message is used to request the first node to assist in managing the sub-area corresponding to the adjacent first node;
determining a target sensing result based on sensing detection data of sensing nodes within the sub-area corresponding to the first node and the sub-area corresponding to the adjacent first node; and
sending the target sensing result to the sensing network element.

17. The method according to claim 10, further comprising:
receiving sub-area information sent from the sensing network element, wherein the sub-area information comprises an identifier of each sub-area and range information of each sub-area.

18. A sensing communication system, comprising:
a first node, configured to determine a sensing result of a managed sub-area, and send the sensing result to a sensing network element; and
the sensing network element, configured to receive a plurality of sensing results from a plurality of first nodes, and determine a sensing result of a sensing area based on sensing results in a plurality of sub-areas, wherein the sensing area comprises the plurality of sub-areas.

19. A communication apparatus, comprising a memory and a processor, wherein the memory and the processor are coupled and the memory is configured to store instructions executable by the processor, and the processor, when executing the instructions, performs the method according to any one of claims 1 to 9, or the method according to any one of claims 10 to 17.

20. A computer-readable storage medium, wherein the computer-readable storage medium has computer program instructions stored therein, and the computer program instructions, when executed on a computer, cause the computer to perform the method according to any one of claims 1 to 9, or the method according to any one of claims 10 to 17.
